# EUROPEAN PATENT APPLICATION

(11) **EP 4 653 249 A1**
(43) Date of publication of application: **26.11.2025**
(21) Application number: 24177937.0
(22) Date of filing: 24.05.2024
(51) Int. Cl.: B60L 53/55, B60L 53/10

(54) **A METHOD FOR REFORMING AN ELECTROLYTIC CAPACITOR ASSEMBLY OF AN ELECTRIC VEHICLE SUPPLY EQUIPMENT, A MOBILE REFORMING SYSTEM FOR REFORMING AN ELECTROLYTIC CAPACITOR ASSEMBLY, AND A SERVICE VEHICLE WITH A MOBILE REFORMING SYSTEM**

(71) Applicant: ABB E-mobility B.V., 2629 JG Delft (NL)
(72) Inventor: FIESOLI, Guido, 50012 Firenze (IT); MISKIEWICZ, Milosz, 30-392 Krakow (PL); NALDINI, Andrea, 52027 Arezzo (IT); POLIT, Aleksander, 30198 Krakow (PL)
(74) Representative: Zimmermann & Partner Patentanwälte mbB

(57) **Abstract**

A method for reforming an electrolytic capacitor assembly of an electric vehicle supply equipment, EVSE, configured for connecting to an electric grid for charging an electric vehicle, EV, using electric power from the electric grid, the method including: connecting a mobile off-grid electric power source to the EVSE; and applying to the electrolytic capacitor assembly, by the mobile off-grid electric power source, a reforming voltage pattern for reforming the electrolytic capacitor assembly.

## Description

### Field of the disclosure

The invention is in the field of electric vehicle charging systems. Embodiments of the present application relate to a method for reforming an electrolytic capacitor assembly of an electric vehicle supply equipment, a mobile reforming system for reforming an electrolytic capacitor assembly, and a service vehicle with a mobile reforming system.

### Technical Background

Electrolytic capacitors are used in electric vehicle charging stations. Failure of the electrolytic capacitors in the field may result in downtime of the electric vehicle charging station and/or permanent damage to the electric vehicle charging station. The electrolytic capacitors need to be stored properly according to manufacturer prescriptions. In case of extended stay in an unpowered condition, e.g. during long times of storage, the electrolytic capacitors may degrade. The electrolytic capacitors have a leakage current when a direct current is applied. After long dead storage of the electrolytic capacitors, the electrolytic capacitors may degrade such that this leakage current may increase and, for a short time, can be 10 times greater at the time of reuse. Such high leakage currents can result in permanent degradation on components performance and even failure of the component. Therefore, in case of extended stay in an unpowered condition, the electrolytic capacitors need to be reformed to avoid failures in the field.

This invention addresses these issues, by providing a method and a mobile reforming system for reforming an electrolytic capacitor assembly of an electric vehicle supply equipment.

### Summary of the disclosure

The present invention proposes a method for reforming an electrolytic capacitor assembly of an electric vehicle supply equipment using a mobile off-grid electric power source. The electrolytic capacitor assembly may be reformed during a commissioning phase of the electric vehicle supply equipment. In some embodiments, the mobile off-grid electric power source is a battery of an electric vehicle. Using power from the mobile off-grid electric power source the electrolytic capacitors are restored. In some embodiments, specific software algorithms are implemented for controlling a voltage pattern for reforming the electrolytic capacitor assembly.

The inventors of the present invention realized, that reforming of electrolytic capacitors has not been explored for electrolytic capacitors within power modules, power rectifiers and/or within a complete electric vehicle supply equipment (EVSE). The present invention provides a method and a mobile reforming system for reforming an electrolytic capacitor assembly of an electric vehicle supply equipment (EVSE) and a service vehicle with a mobile reforming system. The method can be performed using AC voltage via active power electronics, particularly an AC off-grid electric power source, or DC voltage, particularly a DC off-grid electric power source. The mobile reforming system may include active power electronic devices for reforming the electrolytic capacitor assembly using an AC voltage. The method for reforming of the electrolytic capacitor assembly may be performed in the field as part of a commissioning procedure. The method for reforming of the electrolytic capacitor assembly may be carried out using a service car or customer vehicle supporting vehicle to grid (V2G) technology.

Reference will now be made in detail to the various embodiments of the present disclosure, one or more examples of which are illustrated in the figures. Generally, only the differences with respect to individual embodiments are described. Each example is provided by way of explanation and is not meant as a limitation of the present disclosure. Features illustrated or described as part of one embodiment can be used on or in conjunction with other embodiments to yield yet a further embodiment. It is intended that the description includes such modifications and variations.

A method for reforming an electrolytic capacitor assembly of an electric vehicle supply equipment according to claim 1, a mobile reforming system for reforming an electrolytic capacitor assembly of an electric vehicle supply equipment according to claim 11, and a service vehicle with a mobile reforming system according to claim 13 is provided. Further aspects, advantages, and features are apparent from the dependent claims, the description, and the accompanying drawings.

Advantageously, reforming an electrolytic capacitor assembly of an electric vehicle supply equipment according to a method described herein, allows to reduce costs, provide added functionality, and provide improved performance. Reforming the electrolytic capacitors reduces field failure rate of electrolytic capacitors. By reforming the electrolytic capacitors, the storage past life is reset, particularly the past life from production to operation is reset.

Reforming the electrolytic capacitors helps to manage storage conditions. Restoring the electrolytic capacitors also reduces the cost of operation since fewer, or none at all, hardware replacements due to degradation are necessary.

Further advantages of embodiments include to use a service electric vehicle as the mobile off-grid electric power source for restoring the electrolytic capacitors of the electric vehicle supply equipment (EVSE). Particularly, the mobile off-grid electric power source may be a battery pack assembly of the service electric vehicle. The reforming voltage pattern may be applied using a controller, for example an EVSE controller and/or a reforming system controller. The controller may control the reforming voltage pattern according to a reforming algorithm or a predetermined U-I-curve. The bidirectionality of power converters, particularly DC/DC power converters may be used to reach DC-bank capacitors with controlled U-I waveforms. The method may be performed during commissioning of EVSE, such as chargers for electric vehicles. The method may be performed after a storage period.

According to an aspect, a method for reforming an electrolytic capacitor assembly of an electric vehicle supply equipment, EVSE, configured for connecting to an electric grid for charging an electric vehicle, EV, using electric power from the electric grid is provided. The method includes connecting a mobile off-grid electric power source to the EVSE, and applying to the electrolytic capacitor assembly, by the mobile off-grid electric power source, a reforming voltage pattern for reforming the electrolytic capacitor assembly.

Electric vehicles may, for example, be cars, buses, boats, ships, EVTOLs, mining trucks, AGVs, or any other type of electric vehicle. The electric vehicle supply equipment may be a supply equipment for electric vehicles, particularly a charging station for electric vehicles. The EVSE may be for any type of electric vehicle. Particularly, the EVSE may be for cars, buses, boats, ships, EVTOLs, mining trucks, AGVs, and/or any other type of electric vehicle.

The electric vehicle supply equipment (EVSE) comprises an electrolytic capacitor assembly. The electrolytic capacitor assembly may be provided within or in combination with power converters of the electric vehicle supply equipment. The electrolytic capacitor assembly may be provided to improve a voltage output of the EVSE, particularly of the power converter. The electrolytic capacitor assembly may be provided in a DC link. The DC link may be formed between two converters. The DC link may be formed between the DC output or input of two converters. The two converters may be AC/DC converters or DC/DC converters. The electrolytic capacitor assembly may be provided in a DC link formed between a first converter and a second converter. The EVSE may comprise the first converter and/or the second converter. The first converter may be an AC/DC converter, an AC/AC converter or a DC/DC converter. The second converter may be an AC/DC converter, an AC/AC converter, or a DC/DC converter. The first converter may be an AC/DC converter, also referred to as the first AC/DC converter, and the second converter may be a DC/DC converter, also referred to as the second DC/DC converter. The DC link may be formed between a DC output of the first AC/DC converter and a DC input of the second DC/DC converter. In one embodiment, that can be combined with other embodiments described herein, the electrolytic capacitor assembly may be provided in a DC link formed between a DC output of a first AC/DC converter and a DC input of a second DC/DC converter. The electrolytic capacitor assembly may comprise bulk capacitors. The electrolytic capacitor assembly may comprise bank capacitors. The electrolytic capacitor assembly may comprise two or more electrolytic capacitors. The two or more capacitors may be provided in parallel and/or in series to each other.

The EVSE may comprise a second electrolytic capacitor assembly. The second electrolytic capacitor assembly may be provided at an output side of the EVSE. The second electrolytic capacitor assembly may improve a charging voltage provided to the electric vehicle. The second electrolytic capacitor assembly may be provided in a second DC link. The second DC link may be formed between an output of a third converter and an electric vehicle connected to the EVSE, particularly a battery of the electric vehicle connected to the EVSE. The third converter may be a DC/DC converter. The second converter may be the third converter. The second DC link may be formed between an output of the second converter and an electric vehicle connected to the EVSE, particularly a battery of the electric vehicle connected to the EVSE. The electrolytic capacitor assembly may be provided in a DC link connected to an input side of a DC/DC converter, particularly the second converter, and the second electrolytic capacitor assembly may be provided in a DC link connected to an output side of the DC/DC converter, particularly, the second converter.

The EVSE is configured for connecting to an electric grid for charging an electric vehicle (EV) using electric power from the electric grid. The electric grid may be an AC electric grid providing AC electric power, particularly AC voltage and AC current. The electric grid may be a DC electric grid providing DC electric power, particularly DC voltage and DC current. The electric grid may be a low voltage (LV) grid, a medium voltage grid (MV), a high voltage grid (HV) or an extra high voltage grid. The EVSE may be connected to the electric grid through a transformer. The EVSE may be connected to an output of a transformer and the electric grid may be connected to an input of the transformer. The EVSE may be configured to be disconnected from the electric grid. A switchgear may be provided between the EVSE and the electric grid for disconnecting the EVSE from the electric grid. The switchgear may be provided between the EVSE and the transformer. In some embodiments, the reforming voltage pattern is applied while the EVSE is disconnected from the electric grid. The EVSE may be connected to the electric grid after reforming of the electrolytic capacitor assembly. The method for reforming the electrolytic capacitor assembly of the EVSE may be carried out upon installation of the EVSE and/or upon installation of new capacitors in already commissioned EVSE.

The EVSE may be provided with an EVSE controller. The EVSE controller may be connected to the first converter, particularly the first converter being an AC/DC converter, the second converter, particularly the second converter being a DC/DC converter, the mobile off-grid electric power source and/or the electric vehicle which is to be charged by the EVSE. The EVSE controller may control a charging operation carried out by the EVSE. The EVSE controller may control a charging current, a charging voltage, and/or a charging power provided by the EVSE to the electric vehicle. The EVSE controller may control the first converter, particularly the first converter being an AC/DC converter, the second converter, particularly the second converter being a DC/DC converter, the mobile off-grid electric power source, and/or the electric vehicle during the charging operation. The EVSE controller may be configured to control the reforming voltage provided by the mobile off-grid electric power source to the electrolytic capacitor assembly according to a reforming voltage pattern for reforming the electrolytic capacitor assembly. Particularly, configured to control an operation of the mobile off-grid electric power source to control the reforming voltage provided by the mobile off-grid electric power source to the electrolytic capacitor.

A mobile off-grid electric power source is connected to the EVSE. The mobile off-grid electric power source is connected to the EVSE for providing a reforming voltage to the EVSE. The mobile off-grid electric power source provides a reforming voltage pattern to the EVSE. The mobile off-grid electric power source is connected to the electrolytic capacitor assembly. In some embodiments, that can be combined with other embodiments described herein, the electric grid is an AC grid delivering AC electric power to the EVSE and the EVSE comprises an AC/DC converter for charging the EV using DC electric power, and wherein the electrolytic capacitor assembly is an electrolytic capacitor assembly of the AC/DC converter, particularly wherein the electrolytic capacitor assembly comprises a bank capacitor of the AC/DC converter.

The electrolytic capacitor assembly may be provided in a DC link provided between an output of the first converter being an AC/DC converter, i.e. the first AC/DC converter, and an input of the second converter being a DC/DC converter, i.e. the second DC/DC converter. The mobile off-grid electric power source may be directly connected to the electrolytic capacitor assembly. The mobile off-grid electric power source may be connected through a converter to the electrolytic capacitor assembly. The mobile off-grid electric power source may be connected to the electrolytic capacitor assembly through the first AC/DC converter. The mobile off-grid electric power source may be connected to an AC input of the first AC/DC converter. The mobile off-grid electric power source may be an AC electric power source.

The mobile off-grid electric power source may be connected to the electrolytic capacitor assembly through the second DC/DC converter. The mobile off-grid electric power source may be connected to a DC output of the second DC/DC converter. Advantageously, a bi-directionality of the DC/DC converter can be used to provide a voltage to the DC output of the DC/DC converter, such that a voltage is provided to the DC link having the electrolytic capacitor assembly at the DC input of the DC/DC converter. Effectively, an input and output side of the DC/DC converter can be switched due to the bi-directionality of the DC/DC converter. The mobile off-grid electric power source may be connected to the DC output of the second DC/DC converter through the second electrolytic capacitor assembly. In some embodiments, the reforming voltage pattern is applied to a DC bus of the EVSE.

Advantageously, the bi-directionality of the DC/DC converter allows to connect the mobile off-grid electric power source to the electrolytic capacitor assembly either through the first AC/DC converter or through the second DC/DC converter. The mobile off-grid electric power source can be an AC electric power source and/or a DC electric power source. In some embodiments, which can be combined with other embodiments described herein, the mobile off-grid electric power source is a DC power source, particularly wherein the reforming voltage pattern is a DC voltage pattern.

The reforming voltage pattern for reforming the electrolytic capacitor assembly is applied to the electrolytic capacitor assembly. The reforming voltage pattern is applied by the mobile off-grid electric power source. Applying the reforming voltage pattern is understood as applying a reforming voltage, particularly according to the reforming voltage pattern. The reforming voltage pattern may provide a reforming voltage to the electrolytic capacitor assembly that is such, that an electrolytic capacitor assembly is reformed, particularly without damaging the electrolytic capacitor assembly. In some embodiments, that can be combined with other embodiments described herein, the reforming voltage pattern includes gradually ramping up a reforming voltage applied to the electrolytic capacitor assembly. During the gradually ramping up a reforming voltage, a current applied to the electrolytic capacitor assembly may be limited.

The application of the reforming voltage pattern may be controlled by a controller. The controller may be the EVSE controller and/or a reforming system controller . The reforming system controller may be configured to control the reforming voltage provided by the mobile off-grid electric power source to the electrolytic capacitor assembly according to a reforming voltage pattern for reforming the electrolytic capacitor assembly. In some embodiments, that can be combined with other embodiments described herein, the application of the reforming voltage pattern is controlled by a controller and according to a reforming algorithm or a predetermined U-I-curve. The controller may be an EVSE controller and/or a reforming system controller.

The reforming voltage pattern may comprises applying the reforming voltage at a first voltage level and gradually ramping up the reforming voltage to a second voltage level being higher than the first voltage level. The gradually ramping up the reforming voltage may be done in a range from the first voltage level to the second voltage level. The first voltage level may be substantially OV and/or the second voltage level may be a rated voltage of the electrolytic capacitor assembly. The reforming voltage may be kept constant at the first voltage level and/or the second voltage level for a predetermined period of time. The second voltage level may be higher than the first voltage level. The gradually ramping up the voltage to the second voltage level may include gradually ramping up the voltage to one or more third voltage levels. The one or more third voltage levels may be between the first voltage level and the second voltage level. The one or more third voltage levels can be different to each other. The one or more third voltage levels may be spaced equidistant between first voltage level and second voltage level. The gradually ramping up the reforming voltage may be done in one or more steps. The reforming voltage may be kept constant at one or more of the third voltage levels for a predetermined period of time.

The mobile off-grid electric power source may be moved to the EVSE. The mobile off-grid electric power source may be moved to the EVSE using a service vehicle. The mobile off-grid electric power source may be provided in a trailer that can be towed by the service vehicle. The mobile off-grid electric power source may be provided in a flat bed of a service vehicle. The mobile off-grid electric power source may be provided in a storage compartment of the service vehicle. In some embodiments, that can be combined with other embodiments described herein, the mobile off-grid electric power source may be moved to the EVSE using a service vehicle.

The mobile off-grid electric power source may be integrated with the service vehicle. A pre-existing power source of the service vehicle may be comprised in the mobile off-grid electric power source. Particularly, a pre-existing power source of the service vehicle may be used as the mobile off-grid electric power source. The pre-existing power source may be the mobile off-grid electric power source. The service vehicle may comprise a drive power source configured for powering a drive of the service vehicle. The drive power source may be a combustion fuel stored in a combustion fuel storage. The off-grid electric power source may be a generator with a combustion engine. The combustion engine may be powered using the combustion fuel. The drive power source may be a battery pack assembly. In some embodiments, that can be combined with other embodiments described herein, the service vehicle is powered by a drive power source and the mobile off-grid electric power source comprises the drive power source. The service vehicle may be an electric vehicle. The drive power source may be a battery pack assembly.

The off-grid electric power source may comprise a renewable energy source. The off-grid electric power source may comprise a solar energy source or a wind energy source. The off-grid electric power source may comprise a battery pack assembly for storing an electric energy produced by the renewable energy source. Advantageously, having a renewable energy source allows to operate the off-grid electric power source without having to charge the off-grid electric power source by an electric grid.

In some embodiments, the mobile off-grid electric power source is a generator with combustion engine, a battery, a renewable energy power source, in particular a solar power source, or a combination thereof.

Advantageously, providing the mobile off-grid electric power source in a service vehicle allows to easily move the mobile off-grid electric power source to the EVSE. The mobile off-grid electric power source can be quickly moved to an EVSE and between different EVSE. Beneficially, a service personal can move the mobile off-grid electric power source to the EVSE faster, such that for more EVSE the electrolytic capacitor assembly can be reformed in the same or less time. Beneficially, the mobile off-grid electric power source provided in a service vehicle allows to move the mobile off-grid electric power source to remote locations that could otherwise not, or only with undue efforts, be provided with an off-grid electric power source.

According to an aspect, a mobile reforming system for reforming an electrolytic capacitor assembly of an electric vehicle supply equipment, EVSE, configured for connecting to an electric grid for charging an electric vehicle, EV, using electric power from the electric grid is provided. The reforming system includes a mobile off-grid electric power source for providing a reforming voltage to the electrolytic capacitor assembly, a connector configured to electrically connect the mobile off-grid electric power source to the EVSE for providing a reforming voltage to the electrolytic capacitor assembly, and a reforming system controller configured to control the reforming voltage provided by the mobile off-grid electric power source to the electrolytic capacitor assembly according to a reforming voltage pattern for reforming the electrolytic capacitor assembly.

The reforming system is considered as mobile if its off-grid electric power source is mobile, i.e., transportable by a user (to the site of the EVSE, by the user, to be usable on-site directly and without further commissioning by the manufacturer). The term "mobile reforming system", however, does not necessitate that each and every other part of the mobile reforming system is mobile, as long as the off-grid electric power source is mobile. Other parts of the mobile reforming system may not be mobile. In fact, other parts of the mobile reforming system may be integral with an electric vehicle supply equipment. For example, the controller configured to control the reforming voltage provided by the mobile off-grid electric power source to the electrolytic capacitor assembly according to a reforming voltage pattern for reforming the electrolytic capacitor assembly may be integral with the EVSE. Particularly, the controller may be the EVSE controller.

The mobile off-grid electric power source is according to embodiments described herein. In some embodiments, the mobile off-grid electric power source is a generator with combustion engine, a battery, a renewable energy power source, in particular a solar power source, or a combination thereof.

The connector is configured to electrically connect the mobile off-grid electric power source to the EVSE. The connector may be configured to connect the mobile off-grid electric power source directly to the electrolytic capacitor assembly of the EVSE. The mobile reforming system may comprise a DC/DC converter configured for connecting the mobile off-grid electric power source to the electrolytic capacitor assembly. The DC/DC converter may be provided in the connector. According to some embodiments, which can be combined with other embodiments described herein the mobile reforming system includes a DC/DC converter configured for connecting the mobile off-grid electric power source to the electrolytic capacitor assembly, wherein the controller is configured to control the DC/DC converter to gradually ramp up the reforming voltage. Particularly, the controller may be configured to control an output of the DC/DC converter to gradually ramp up the reforming voltage.

The connector may be configured for connecting the mobile off-grid electric power source to a converter. The connector may be configured for connecting the mobile off-grid electric power source to an AC input of an AC/DC converter of the EVSE, e.g. the first AC/DC converter. The connector may be configured for connecting the mobile off-grid electric power source to a DC output of a DC/DC converter of the EVSE, e.g. the second DC/DC converter. The connecter may be configured for connecting the mobile off-grid electric power source to the DC output of the DC/DC converter through a second electrolytic capacitor assembly.

The controller is configured to control the voltage provided by the mobile off-grid electric power source to the electrolytic capacitor assembly for reforming the electrolytic capacitor assembly. The controller controls the reforming voltage according to a reforming voltage pattern. The reforming voltage pattern may be according to a reforming algorithm or a predetermined U-I-curve.

The controller may be the EVSE controller. In such a case, when reforming an electrolytic capacitor assembly of an EVSE using the mobile reforming system, the EVSE controller may be connected to the mobile off-grid electric power source. The mobile off gird electric power source may be configured to be connected to the EVSE controller, particularly such that the EVSE controller can control the reforming voltage provided by the mobile off-grid electric power source to the electrolytic capacitor assembly according to a reforming voltage pattern for reforming the electrolytic capacitor assembly. Advantageously, the mobile reforming system can benefit from the pre-existing infrastructure of the EVSE, particularly the EVSE controller.

The controller may be a reforming system controller. The reforming system controller may be integral with the mobile reforming system. The reforming system controller may be configured to control the reforming voltage provided by the mobile off gird electric power source to the electrolytic capacitor assembly according to a reforming voltage pattern for reforming the electrolytic capacitor assembly. Particularly, configured to control an operation of the mobile off-grid electric power source to control the reforming voltage provided by the mobile off-grid electric power source to the electrolytic capacitor assembly. The mobile reforming system may comprise the EVSE controller and the reforming system controller. The EVSE controller and the reforming system controller may be configured to communicated with each other and/or to control the reforming voltage provided by the mobile off gird electric power source to the electrolytic capacitor assembly according to a reforming voltage pattern for reforming the electrolytic capacitor assembly.

The reforming voltage pattern may comprises applying the reforming voltage at a first voltage level and gradually ramping up the reforming voltage to a second voltage level being higher than the first voltage level. The gradually ramping up the reforming voltage may be done in a range from the first voltage level to the second voltage level. The first voltage level may be substantially 0V and/or the second voltage level may be a rated voltage of the electrolytic capacitor assembly. The reforming voltage may be kept constant at the first voltage level and/or the second voltage level for a predetermined period of time. The second voltage level may be higher than the first voltage level. The gradually ramping up the voltage to the second voltage level may include gradually ramping up the voltage to one or more third voltage levels. The one or more third voltage levels may be between the first voltage level and the second voltage level. The one or more third voltage levels can be different to each other. The one or more third voltage levels may be spaced equidistant between first voltage level and second voltage level. The gradually ramping up the reforming voltage may be done in one or more steps. The reforming voltage may be kept constant at one or more of the third voltage levels for a predetermined period of time.

According to an aspect, a service vehicle with a mobile reforming system according to embodiments described herein is provided.

The service vehicle may be a car, a truck, a bus, an aerial vehicle, a ship, or any other suitable type of vehicle. The service vehicle may be an electric vehicle as described herein. The service vehicle may comprise a drive power source for powering a drive of the service vehicle. The drive power source may be a combustion fuel stored in a combustion fuel storage. The off-grid electric power source may be a generator with a combustion engine. The combustion engine may be powered using the combustion fuel. The drive power source may be a battery pack assembly. The mobile off-grid electric power source may comprise the drive power source. According to an embodiment, that can be combined with other embodiments described herein, the service vehicle comprises a drive power source for powering a drive of the service vehicle, wherein the mobile off-grid electric power source comprises the drive power source. The service vehicle may be an electric vehicle and the drive power source may be a battery pack assembly of the electric vehicle.

Those skilled in the art will recognise additional features and advantages upon reading the following detailed description, and upon viewing the accompanying drawings.

### Brief description of the drawings

So that the manner in which the above recited features of the present disclosure can be understood in detail, a more particular description of the disclosure, briefly summarized above, may be had by reference to embodiments. The accompanying drawings relate to embodiments of the disclosure and are described in the following:
Fig. 1 is a schematic illustration showing an electric vehicle supply equipment having electrolytic capacitors, the electrolytic capacitors being restored by a mobile off-grid electric power source.
Fig. 2 is a schematic illustration of a mobile reforming system for reforming an electrolytic capacitor assembly of an electric vehicle supply equipment according to embodiments described herein.
Fig. 3 is a schematic illustration of a service vehicle with a mobile reforming system.
Fig. 4 is a schematic illustration of a method for reforming an electrolytic capacitor assembly of an electric vehicle supply equipment according to embodiments described herein.

### Detailed description of the drawings

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

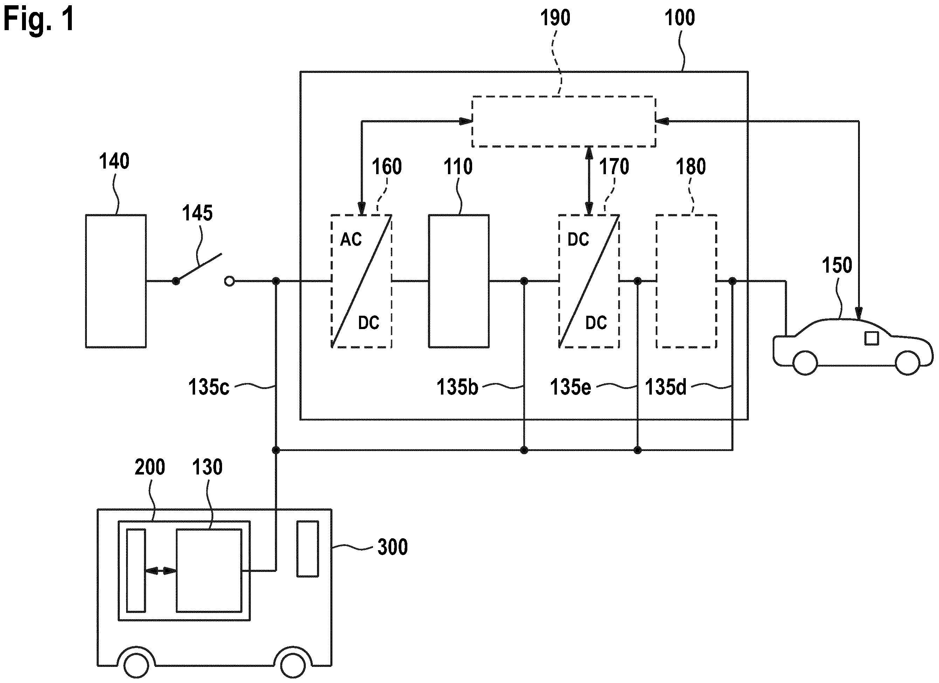

Fig. 1 is a schematic illustration of an electric vehicle supply equipment (EVSE) 100 having an electrolytic capacitor assembly 110. The electric vehicle supply equipment is configured for connecting to an electric grid 140 for charging an electric vehicle 150. A mobile off-grid electric power source 130 is connected to the EVSE for reforming the electrolytic capacitor assembly 110.

The EVSE may be connected to the electric grid 140 through a transformer (not shown). The EVSE may be connected to the electric grid 140 such that the connection between the EVSE 100 and the electric grid 140 can be disconnected. A switchgear 145 is provided in the connection of the EVSE and the electric grid 140. The switchgear 145 can disconnect the EVSE 100 from the grid 140. As shown in Fig. 1, the EVSE 100 is disconnected from the grid 140 by the switchgear 145. The EVSE may be disconnected from the grid 140 for reforming the electrolytic capacitor assembly. After reforming the electrolytic capacitor assembly 110, the switchgear 145 may be closed to connect to the EVSE 100 to the electric grid 140.

In some embodiments, the EVSE may comprise one or more of a first AC/DC converter 160, a second DC/DC converter 170, a second electrolytic capacitor assembly 180 and/or an EVSE controller 190.

The first AC/DC converter is provided at an input side of the EVSE. An AC input of the AC/DC converter may be configured to be connected to the electric grid. The AC input of the AC/DC converter may connected to a transformer connected to the electric grid. A DC output of the AC/DC converter may be comprised in a DC link. The DC link may be formed between the DC output of the first AC/DC converter and a DC input of the second DC/DC converter. The electrolytic capacitor assembly may be provided in the DC link. The second DC/DC link is provided at an output side of the EVSE. A DC output of the second DC/DC converter may be configured to be connected to an electric vehicle for providing a charging power to the electric vehicle. The DC output of the second DC/DC converter may be connected to an electric vehicle through the second electrolytic capacitor assembly 180. The EVSE controller 190 may be connected to the first AC/DC converter 160, the second DC/DC converter 170, the mobile off-grid electric power source (130) and/or the electric vehicle 150. The EVSE controller 190 may be configured for controlling the first AC/DC converter 160, the second DC/DC converter 170, the mobile off-grid electric power source (130) and/or the electric vehicle 150 during a charging operation and/or during a reforming of the electrolytic capacitor assembly.

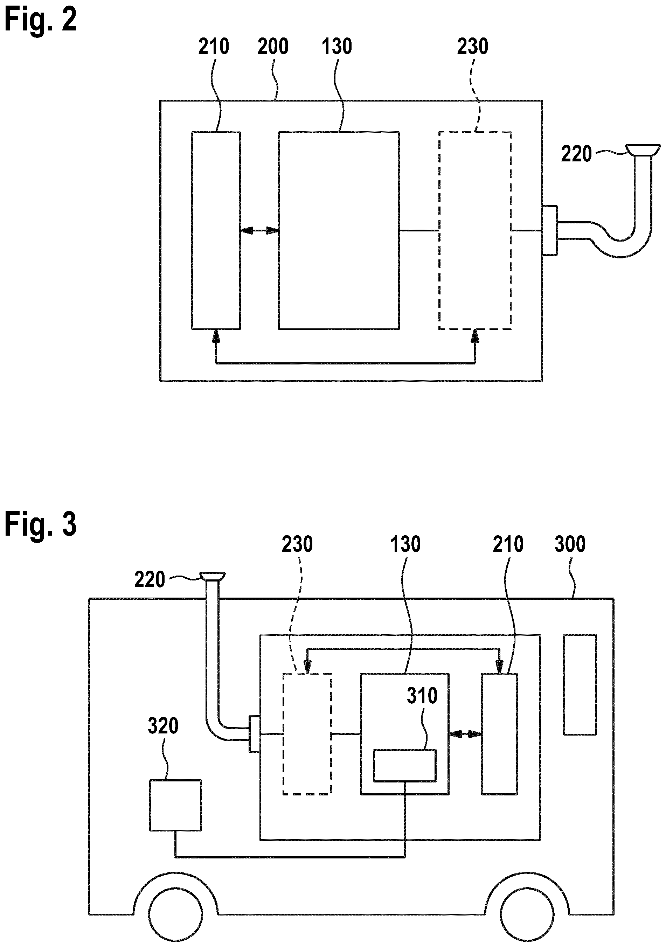

In Fig. 1, the EVSE controller 190 is shown connected to the mobile off-grid electric power source 130. The EVSE controller may control an operation of the mobile off-grid electric power source. The EVSE controller may be configured to control the reforming voltage provided by the mobile off-grid electric power source (130) to the electrolytic capacitor assembly according to a reforming voltage pattern for reforming the electrolytic capacitor assembly. In other embodiments, a reforming system controller (shown in Figs. 2 and 3) may be provided to control an operation of the mobile off-grid electric power source.

The mobile off-grid electric power source 130 is connected to the EVSE through one or more of a first connection 135a, a second connection 135b, a third connection 135c, and/or a fourth connection 135d. The first connection 135a connects the mobile off-grid electric power source to the AC input of the first AC/DC converter. The mobile off-grid electric power source is connected to the electrolytic capacitor assembly through the first AC/DC converter. The mobile off-grid electric power source connected to the EVSE by the first connection may be an AC electric power source.

The second connection 135b connects the mobile off-grid electric power source directly to the electrolytic capacitor assembly 110. Advantageously, a bi-directionality of the DC/DC converter can be used to provide a voltage to the DC output of the DC/DC converter, such that a voltage is provided to the DC link having the electrolytic capacitor assembly at the DC input of the DC/DC converter. Effectively, an input and output side of the DC/DC converter can be switched due to the bi-directionality of the DC/DC converter. The third connection 135c connects the mobile off-grid electric power source to the DC output of the second DC/DC converter. The mobile off-grid electric power source is connected to the electrolytic capacitor assembly through the second DC/DC converter. The fourth connection 135d connects the mobile off-grid electric power source to the second electrolytic capacitor assembly. The mobile off-grid electric power source is connected to the electrolytic capacitor assembly through the second electrolytic capacitor assembly and the second DC/DC converter.

The mobile off-grid power source 130 may be comprised in a mobile reforming system 200. The mobile reforming system may be provided in a service vehicle 300.

Fig. 2 is a schematic illustration of a mobile reforming system 200 according to embodiments described herein. The mobile reforming system 200 comprises a mobile off-grid electric power source 130, a reforming system controller 210, and a connector 220. The connector 220 is configured for connecting the mobile off-grid electric power source to an EVSE. Particularly, the connector 220 is configured for connecting the mobile off-grid electric power source to a converter or directly to an electrolytic capacitor assembly of an EVSE. The connector 220 may be configured for connecting the mobile off-grid electric power source to an input and/or output of an AC/DC converter or a DC/DC converter. The connector 220 may be configured for connecting the mobile off-grid electric power source to a second electrolytic capacitor assembly.

The reforming system controller 210 is connected to the mobile off-grid electric power source. The reforming system controller 210 may be configured for controlling an operation of the mobile off-grid electric power source. The reforming system controller 210 may be configured for controlling a reforming voltage provided by the mobile off-grid electric power source. The reforming system controller 210 may control the reforming voltage according to a reforming voltage pattern. The reforming system controller 210 may control the reforming voltage according to a reforming algorithm and/or a predetermined U-I-curve.

In Figs. 2 and 3, the mobile reforming system 200 is shown with a reforming system controller 210. In other embodiments, the mobile reforming system 200 may comprise an EVSE controller, for example the EVSE controller 190 as shown in Fig. 1. The mobile reforming system 200 has a controller. The controller may be the EVSE controller 190 and/or the reforming system controller 210. The mobile reforming system may comprise the EVSE controller 190 and the reforming system controller 210. The EVSE controller 190 and the reforming system controller 210 may be configured to communicated with each other and/or to control the reforming voltage provided by the mobile off-grid electric power source 130 to the electrolytic capacitor assembly 110 according to a reforming voltage pattern for reforming the electrolytic capacitor assembly.

In some embodiments, the mobile reforming system 200 may comprise a power source converter 230. The power source converter 230 may be an AC/DC converter or a DC/DC converter. The power source converter may be connected to an output of the mobile off-grid electric power source. The mobile off-grid electric power source 130 may be connected to an EVSE through the power source converter 230. The reforming system controller 210 may be connected to the power source converter 230. The reforming system controller 210 may be configured to control the power source converter 230.

Fig. 3 is an illustration of a service vehicle 300 with a mobile reforming system 200 according to embodiments described herein. The service vehicle 300 includes a drive power source 310.

The drive power source powers a drive 320 of the service vehicle. The drive power source 310 is comprised in the mobile off-grid electric power source. Particularly, the drive power source 310 may be the mobile off-grid electric power source. The drive power source 310 may be a combustion fuel stored in a combustion fuel tank or a battery pack assembly of an electric vehicle. The service vehicle 300 may be an electric vehicle.

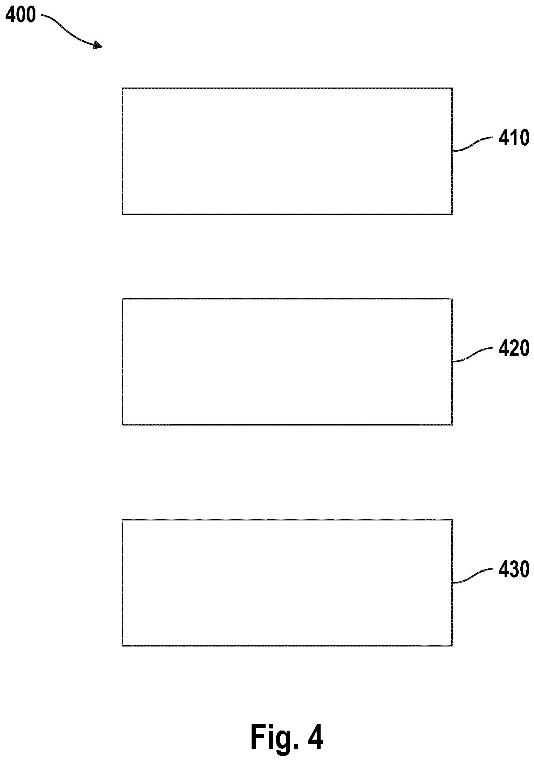

Fig. 4 is a schematic illustration of a method 400 for reforming an electrolytic capacitor assembly of an electric vehicle supply equipment, EVSE, configured for connecting to an electric grid for charging an electric vehicle, EV, using electric power from the electric grid.

At step 410, a mobile off-grid electric power source is connected to the EVSE.

At step 420, a reforming voltage pattern for reforming the electrolytic capacitor assembly is applied to the electrolytic capacitor assembly by the mobile off-grid electric power source.

The method may further comprise at optional step 405, moving the mobile off-grid electric power source to the EVSE using a service vehicle. The service vehicle may be powered by a drive power source and the mobile off-grid electric power source may comprise the drive power source. The service vehicle may be an electric vehicle. The drive power source may be a battery pack assembly.

The application of the reforming voltage pattern may include gradually ramping up the voltage. The application of the reforming voltage pattern may be controlled by a controller and according to a reforming algorithm or a predetermined U-I-curve. The mobile off-grid electric power source may be a DC power source. The reforming voltage pattern may be a DC voltage pattern. The electric grid may be an AC grid delivering AC electric power to the EVSE and the EVSE comprises an AC/DC converter for charging the EV using DC electric power, and the electrolytic capacitor assembly may be an electrolytic capacitor assembly of the AC/DC converter. The electrolytic capacitor assembly comprises a bank capacitor of the AC/DC converter. The reforming voltage pattern may be applied to a DC bus of the EVSE.

The method may further include disconnecting the EVSE from the electric grid. The reforming voltage pattern may be applied while the EVSE is disconnected from the electric grid. At optional step 430, the method may further include connecting the EVSE to the electric grid after reforming of the electrolytic capacitor assembly.

While the foregoing is directed to embodiments, other and further embodiments may be devised without departing from the basic scope, and the scope is determined by the claims that follow.

## Claims

1. A method for reforming an electrolytic capacitor assembly (110) of an electric vehicle supply equipment, EVSE, (100) configured for connecting to an electric grid (140) for charging an electric vehicle, EV, (150) using electric power from the electric grid, the method comprising:
connecting a mobile off-grid electric power source (130) to the EVSE (100); and
applying to the electrolytic capacitor assembly (110), by the mobile off-grid electric power source (130), a reforming voltage pattern for reforming the electrolytic capacitor assembly (110).

2. The method of claim 1, comprising moving the mobile off-grid electric power source (130) to the EVSE (100) using a service vehicle (300).

3. The method of claim 2, wherein the service vehicle (300) is powered by a drive power source (310) and the mobile off-grid electric power source (130) comprises the drive power source (310).

4. The method of claim 3, wherein the service vehicle (300) is an electric vehicle, particularly wherein the drive power source (310) is a battery pack assembly.

5. The method of any one of claims 1 through 4, wherein the application of the reforming voltage pattern includes gradually ramping up a reforming voltage applied to the electrolytic capacitor assembly, particularly with a limited current applied to the electrolytic capacitor assembly.

6. The method of any one of claims 1 through 5, wherein the application of the reforming voltage pattern is controlled by a controller (190, 210) and according to a reforming algorithm or a predetermined U-I-curve.

7. The method of any one of claims 1 through 6, wherein the mobile off-grid electric power source (130) is a DC power source, particularly wherein the reforming voltage pattern is a DC voltage pattern.

8. The method of any one of claims 1 through 7, wherein the electric grid (140) is an AC grid delivering AC electric power to the EVSE (100) and the EVSE comprises an AC/DC converter (160) for charging the EV (150) using DC electric power, and wherein the electrolytic capacitor assembly (110) is an electrolytic capacitor assembly of the AC/DC converter (160), particularly wherein the electrolytic capacitor assembly (110) comprises a bank capacitor of the AC/DC converter (160).

9. The method of any one of claims 1 through 8, wherein the reforming voltage pattern is applied to a DC bus of the EVSE.

10. The method of any one of claims 1 through 9, wherein the reforming voltage pattern is applied while the EVSE (100) is disconnected from the electric grid, particularly the method further comprising connecting the EVSE to the electric grid after reforming of the electrolytic capacitor assembly.

11. A mobile reforming system (200) for reforming an electrolytic capacitor assembly of an electric vehicle supply equipment, EVSE, configured for connecting to an electric grid for charging an electric vehicle, EV, using electric power from the electric grid, the reforming system comprising:
a mobile off-grid electric power source (130) for providing a reforming voltage to the electrolytic capacitor assembly;
a connector (220) configured to electrically connect the mobile off-grid electric power source (130) to the EVSE for providing a reforming voltage to the electrolytic capacitor assembly; and
a controller (190, 210) configured to control the reforming voltage provided by the mobile off-grid electric power source (130) to the electrolytic capacitor assembly according to a reforming voltage pattern for reforming the electrolytic capacitor assembly.

12. The mobile reforming system (200) of claim 11, comprising a DC/DC (230) converter configured for connecting the mobile off-grid electric power source (130) to the electrolytic capacitor assembly, wherein the controller (190, 210) is configured to control the DC/DC converter (230) to gradually ramp up the reforming voltage.

13. A service vehicle (300) with a mobile reforming system (200) of any one of claims 11 through 12.

14. The service vehicle (300) of claim 13, comprising a drive power source (310) for powering a drive (320) of the service vehicle (300), wherein the mobile off-grid electric power source (130) comprises the drive power source (310).

15. The service vehicle of claim 14, wherein the service vehicle (300) is an electric vehicle and the drive power source (310) is a battery pack assembly of the electric vehicle.
